(19) **Europäisches Patentamt**

**European Patent Office**

**Office européen des brevets**

(11) **EP 0 594 886 B1**

(12) **EUROPÄISCHE PATENTSCHRIFT**

(45) Veröffentlichungstag und Bekanntmachung des Hinweises auf die Patenterteilung:
**18.07.2001 Patentblatt 2001/29**

(51) Int Cl.[7]: **G05D 23/00**, G05D 23/19, F24D 19/10

(21) Anmeldenummer: **92118549.2**

(22) Anmeldetag: **29.10.1992**

(54) **Verfahren zum Regeln einer Heizungsanlage und Vorrichtung zur Durchführung des Verfahrens**

Method and controlling a heating system and device for carrying out the method

Procédé de régulation d'une installation de chauffage et dispositif pour sa mise en oeuvre

(84) Benannte Vertragsstaaten:
**AT CH DE DK FR LI SE**

(43) Veröffentlichungstag der Anmeldung:
**04.05.1994 Patentblatt 1994/18**

(73) Patentinhaber: **Landis & Gyr Technology Innovation AG
6301 Zug (CH)**

(72) Erfinder: **Kocher, Peter
CH-6043 Adligenswil (CH)**

(74) Vertreter: **Müller, Hans-Jürgen, Dipl.-Ing. et al
Müller, Schupfner & Gauger
Postfach 10 11 61
80085 München (DE)**

(56) Entgegenhaltungen:
**EP-A- 0 070 471          EP-A- 0 181 259
EP-A- 0 308 848          EP-A- 0 316 496
CH-A- 667 513            DE-A- 1 454 448
DE-A- 3 732 833          GB-A- 2 003 612
US-A- 4 380 317**

- **IECON¡89 Bd. 1, 6. November 1989, PHILADELPHIA Seiten 721 - 725 KIYOSHI OHISHI 'ROBUST TEMPERARURE CONTROL OF THERMOSTATIC OVEN BASED ON ADAPTATIVE AND FUZZY ALGORITHM'**

EP 0 594 886 B1

**Beschreibung**

Die Erfindung bezieht sich auf ein Verfahren zum Regeln des mittleren Wärmemengenstroms einer Heizungsanlage sowie auf einen Heizungsregler zur Durchführung des Verfahrens gemäß den Oberbegriffen der Ansprüche 1 und 13.

Solche Verfahren und Vorrichtungen, wie Heizungsregler, eignen sich beispielsweise zum Regeln der Temperatur eines Wärmeträgermediums in einer Zentralheizungsanlage, bei der die Raumtemperatur einzelner Räume oder Raumgruppen, z.B. Wohnungen, separat regelbar ist.

Ein Verfahren und eine Vorrichtung der im Oberbegriff der Ansprüche 1 und 13 genannten Art ist aus der DE-C3-28 58 192 bekannt. Hier wird die Vorlauftemperatur des Wärmeträgermediums so eingeregelt, daß die durchschnittliche zeitliche Öffnungsrate aller in der Heizungsanlage angeordneten AUF-ZU-Ventile, mit deren Hilfe die Zufuhr des Wärmeträgermediums zu den Heizkörpern der einzelnen Räume gesteuert wird, im Bereich von 0,5 bis 0,8 liegt. Durch die Variation der Vorlauftemperatur wird die den Räumen zugeführte Heizleistung variiert.

Bekannt ist aus der EP-B1-0 308 848 zudem, zur Anpassung der den Räumen zugeführten Heizleistung unter bestimmten Bedingungen sowohl die Brennerleistung als auch die Fördermenge des Wärmeträgermediums zu variieren.

Trotz dieser an sich zugleich bedarfsgerechten und ökonomischen Betriebsweise kann es vorkommen, daß in Gebäuden mit stark exponierten Räumen oder Wohnungen der Wärmebedarf einzelner Räume oder Wohnungen nicht gedeckt wird.

Es ist somit Aufgabe der Erfindung, ein Verfahren anzugeben, das die den Verbrauchern zugeführte Heizleistung besser am tatsächlichen Wärmebedarf orientiert. Aufgabe ist es weiter, eine entsprechende Vorrichtung anzugeben.

Die genannte Aufgabe wird bei einem Verfahren der gattungsgemäßen Art durch die im Kennzeichen des Anspruchs 1 angegebenen Merkmale gelöst, bei einer entsprechenden Vorrichtung durch die Merkmale des Anspruchs 13. Vorteilhafte Ausgestaltungen ergeben sich aus den abhängigen Ansprüchen.

Durch die Erfindung werden bekannte Nachteile des Stands der Technik behoben:
Die Regelung der Raumtemperatur aufgrund einer Regelabweichung der Raumtemperatur - ermittelt beispielsweise mittels eines Raumtemperaturfühlers, eines Sollwertgebers und eines Vergleichers - führt wegen der Trägheit der Regelstrecke bekanntlich zu deutlichen Regelschwingungen. Wird aufgrund einer solchen Regelabweichung das Stellglied, mit dem der Fluß des Wärmemittels gesteuert wird, betätigt, so bleibt dies u.U. beispielsweise dann ohne Wirkung, wenn aus der Regelabweichung ein Signal zum Öffnen des Stellglieds generiert wird, zu diesem Zeitpunkt das Stellglied aber bereits ganz geöffnet ist. Diese Wirkungslosigkeit läßt sich auch durch die Anwendung bestimmter Regelparameter, wie Differential- und Integralanteile, nicht beheben.

Die Erfindung zeigt hier einen völlig neuartigen Weg auf: Sie läßt sich auch bei witterungsgeführten Raumtemperaturregelungen anwenden, wie dies noch ausgeführt wird, und ist nicht an das Vorhandensein eines stationären Zustands gebunden.

Nachfolgend werden ein Ausführungsbeispiel für das erfindungsgemäße Verfahren sowie ein Ausführungsbeispiel für eine das Verfahren durchführende Vorrichtung näher erläutert, letzteres anhand der Zeichnungen. Es zeigen:

Fig. 1     ein Element zur Bildung eines Wärmebedarfssignals, und
Fig. 2     eine Anordnung zur Verknüpfung mehrerer Wärmebedarfssignale zu einem Leistungsänderungssignal.

Das erfindungsgemäße Verfahren dient zum Regeln des mittleren Wärmemengenstroms, der einzelnen Räumen einer aus mehreren Räumen und/oder Gruppen von Räumen, beispielsweise Wohnungen, bestehenden Zentralheizungsanlage zugeführt wird. Auf diese Weise kann die Temperatur des Raumes bzw. der Räume geregelt werden. Um eine erste Einflußgröße für den Wärmebedarf zu erhalten, wird in bekannter Weise der Öffnungsgrad von an Heizkörpern der einzelnen Räume angebrachten Steuerventilen gemessen. Dabei kann es sich um den Öffnungsgrad von stufenlos verstellbaren Ventilen handeln, aber auch um den mittleren zeitlichen Öffnungsgrad von AUF-ZU-Ventilen. Erfindungsgemäß wird zusätzlich eine Regelabweichung bestimmt, die positiv oder negativ sein kann. Der Öffnungsgrad jedes einzelnen Steuerventils, bei Gruppenheizungen beispielsweise der jedes als Führungsraum dienenden Hauptwohnraums jeder Wohnung, wird mit der Regelabweichung zu einem Wärmebedarfssignal W verknüpft und aufgrund der Größe dieses Wärmebedarfssignals W wird der dem jeweiligen Raum bzw. der jeweiligen Wohnung zugeführte Wärmemengenstrom variiert.

Der Öffnungsgrad des Steuerventils allein läßt erkennen, ob dem Raum mehr oder weniger Wärme zuführbar ist. Hat beispielsweise der Öffnungsgrad eines bestimmten Steuerventils den Wert 0,5, so steht fest, daß durch Verringern, des Öffnungsgrads der Wärmemengenstrom in diesen Raum verkleinerbar und durch Vergrößern des Öffnungsgrads vergrößerbar ist. Beträgt jedoch der Öffnungsgrad 1,0, ist also das Steuerventil voll offen, so gilt, daß sich der Wärmemengenstrom durch Änderung des Öffnungsgrads nur in der einen Richtung beeinflussen läßt.

Aus dem zuvor Gesagten läßt sich ableiten, daß der Öffnungsgrad allein keinen Anhalt dafür gibt, wie groß der Wärmebedarf des Raumes tatsächlich ist und ob dieser Wärmebedarf gedeckt wird. Eine Aussage darüber läßt sich nur im eingeschwungenen stabilen Zustand treffen, nicht aber beispielsweise für Aufheizvorgänge im Anschluß an eine übliche Nachtabsenkung. Der Heizungsregler, der die ganze Heizungsanlage oder Teile davon regelt, kann durch Sollwert-Istwert-Vergleich für die Raumtemperatur zwar fortlaufend erkennen, ob die Regelabweichung der Raumtemperatur negativ, positiv oder Null ist, jedoch bedarf es einer fortlaufenden zeitlichen Überwachung, um eine Aussage darüber zu machen, ob ein eingeschwungener stabiler Zustand vorliegt. Da bei üblichen witterungsgeführten Heizungsanlagen, bei denen für die Abhängigkeit der Vorlauftemperatur von der Außentemperatur eine Heizkurve maßgebend ist, infolge Witterungsänderungen ein stabiler Zustand kaum je erreicht wird, ist also die Ermittlung des Öffnungsgrads der Steuerventile allein durchaus mängelbehaftet. Diese Mängel werden erfindungsgemäß durch die Verknüpfung von Öffnungsgrad und Regelabweichung beseitigt.

Es ist vorteilhaft, wenn bei der Verknüpfung der Regelabweichung mit dem Öffnungsgrad durch einen Gewichtungsfaktor der Einfluß beider Größen auf das resultierende Wärmebedarfssignal W wählbar ist.

Es ist weiter vorteilhaft, für jeden einzelnen Heizkreis, dargestellt durch einen einzigen Raum oder eine einzelne Wohnung, das zuvor genannte Wärmebedarfssignal W separat zu ermitteln und aus diesen einzelnen Wärmebedarfssignalen W ein Gesamtbedarfssignal G zu bilden, aus dem dann ein Leistungsänderungssignal N abgeleitet wird.

Die Bildung des Gesamtbedarfssignals G kann beispielsweise durch eine einfache Mittelwertbildung erfolgen. Dies wird in der Regel ein Kompromiß zwischen Befriedigung extremen Wärmebedarfs in exponierten Räumen oder Wohnungen einerseits und Ökonomie des Energieeinsatzes sein. Für den Fall, daß bevorzugt Wert auf die Befriedigung extremen Wärmebedarfs, also Komfort unter allen Umständen, gelegt wird, können bei der Summenbildung große Wärmebedarfssignale W bevorzugt werden. Um möglichst große Energieeinsparung erreichen zu können, können durch ein abweichendes Summationsverfahren Räume oder Wohnungen mit großem Wärmebedarfssignal W benachteiligt werden. Der Ausgestaltung der Summation der einzelnen Wärmebedarfssignale W zum Gesamtbedarfssignal G kommt also große Bedeutung zu. Das vorliegende Verfahren bietet hier große Freiheit. Je nach der Art der Realisierung des Verfahrens durch eine analoge oder digitale Vorrichtung läßt sich die Summation unterschiedlich gestalten. Insbesondere beim Einsatz einer Regelungsvorrichtung mit einem Mikroprozessor sind unterschiedliche Ausgestaltungen auch einfach implementierbar.

Es sei hier erwähnt, daß bei der Verwirklichung des Verfahrens auch nach den Methoden der Fuzzy-Logik arbeitende Vorrichtungen vorteilhaft angewendet werden können.

Es gibt eine Reihe von Regelabweichungen, die im Rahmen einer Heizungsanlage erfaßbar sind, so beispielsweise die Regelabweichung der Raumtemperatur, die Regelabweichung der Vorlauftemperatur oder jene der Rücklauftemperatur. Bei Anlagen mit Regelung der Spreizung zwischen Vorlauf- und Rücklauftemperatur könnte auch die Regelabweichung dieser Spreizung herangezogen werden. Es hat sich als besonders vorteilhaft herausgestellt, wenn im Rahmen der Erfindung die berücksichtigte Regelabweichung die Regelabweichung der Raumtemperatur ist. In diesem Fall ist es möglich, zur Verwirklichung einer witterungsabhängigen Vorlauftemperaturregelung nur bei einem die gesamte, aus mehreren Heizgruppen bestehenden Heizungsanlage regelnden übergeordneten Regler einen Sollwertgeber mit Heizkurven-Abbildung vorzusehen und die untergeordneten Zonenregler als Raumtemperaturregler auszubilden. In diesem Fall kann auf eine im Regler implementierte sogenannte Schnellaufheizung verzichtet werden.

Vorteilhaft kann es sein, den Wärmemengenstrom durch Veränderung der Durchflußgeschwindigkeit des Wärmeträgermediums zu variieren. Dabei ist jedoch eine obere Grenze zu beachten, um Strömungsgeräusche zu vermeiden. Auch eine untere Grenze ist einzuhalten, weil einer Verringerung der Durchflußgeschwindigkeit des Wärmeträgermediums das Zeitverhalten der Regelstrecke ungünstig beeinflußt.

Deshalb kann es vorteilhaft sein, den Wärmemengenstrom durch Variation der Vorlauftemperatur des Wärmeträgermediums zu verändern.

Dabei ist es ganz besonders vorteilhaft, wenn nicht die Vorlauftemperatur an sich erhöht oder erniedrigt wird, sondern wenn diese Variation der Vorlauftemperatur dadurch erfolgt, daß eine bei der Bestimmung der Vorlauftemperatur in Abhängigkeit von einer Außentemperatur wirksame Heizkurve unverändert bleibt und stattdessen der Sollwert der Raumtemperatur temporär variiert wird. Beim Verändern des Raumtemperatur -Sollwerts wird ganz automatisch in der durch die Heizkurve bestimmten Weise die Vorlauftemperatur unterschiedlich beeinflußt, also auf die Bauart der Heizungsanlage Rücksicht genommen. Eine unterschiedliche Änderung der Vorlauftemperatur je nach Bauart der Heizungsanlage, Radiatorheizung einerseits und Fußbodenheizung andererseits, geschieht somit automatisch. Dadurch werden Einstellvorgänge für die Heizkurve nicht tangiert und etwa vorhandene automatische Heizkurven-Adaptionsvorgänge nicht gestört.

Der Mehr- oder Minderbedarf an Heizenergie wird durch einen Öffnungsgrad y des Ventils, oftmals auch als Ventilstellung bezeichnet, und eine Regeldifferenz R bestimmt. Mehrbedarf besteht, wenn das Ventil mehr oder weniger ganz offen ist und gleichzeitig die Regeldifferenz R deutlich positiv ist. Minderbedarf besteht, wenn das Ventil mehr oder weniger ganz geschlossen ist und gleichzeitig die Regeldifferenz R deutlich negativ ist. Das Wärmebedarfssignal W kann stetig oder stufig sein. Vorteilhaft ist es, wenn das Wärmebedarfssignal W vorzeichenbehaftet ist, indem ein Mehrbedarf durch ein positives Wärmebedarfssignal W und ein Minderbedarf durch ein negatives Wärmebedarfssignal W charakterisiert ist. Dadurch wird auf einfache Weise ermöglicht, bei der Bildung des Gesamtbedarfssignals G unterschiedliche Strategien zu verwirklichen, etwa die Maximierung der Energieeinsparung oder die Maximierung des Komforts. Ein Beispiel dafür, in welcher Weise das Wärmebedarfssignal W vom Öffnungsgrad y und der Regeldifferenz R abhängig ist, wird bei der Beschreibung von Elementen einer das Verfahren verwirklichenden Vorrichtung gegeben werden.

Zeigen mehr oder weniger sämtliche Heizgruppen einer Heizanlage einen Mehrbedarf an, was beispielsweise dann der Fall ist, wenn im Anschluß an eine Nachtabsenkung der größte Teil der Heizgruppen auf Komfortbetrieb umschaltet, so führt dieser Mehrbedarf automatisch zu einer Erhöhung der Heizleistung, ohne daß es spezieller Maßnahmen zur Auslösung der sogenannten Schnellaufheizung bedarf. Die Schwierigkeiten der Implementierung eines geeigneten Algorithmus für diese Schnellaufheizung bei Heizanlagen mit mehreren Heizgruppen, die zu durchaus unterschiedlichen Zeiten von Nachtabsenkung auf Komfortbetrieb umschalten können, sind dadurch automatisch vermieden.

Die Größe der Leistungsänderung wird durch das Gesamtbedarfssignal G bestimmt. Sind die einzelnen Wärmebedarfssignale W und auch das aus diesen gebildete Gesamtbedarfssignal G vorzeichenbehaftet, so bedeutet ein negatives Gesamtbedarfssignal G, daß die Leistung verringert werden soll, und entsprechend bedeutet ein positives Gesamtbedarfssignal G, daß die Leistung erhöht werden soll.

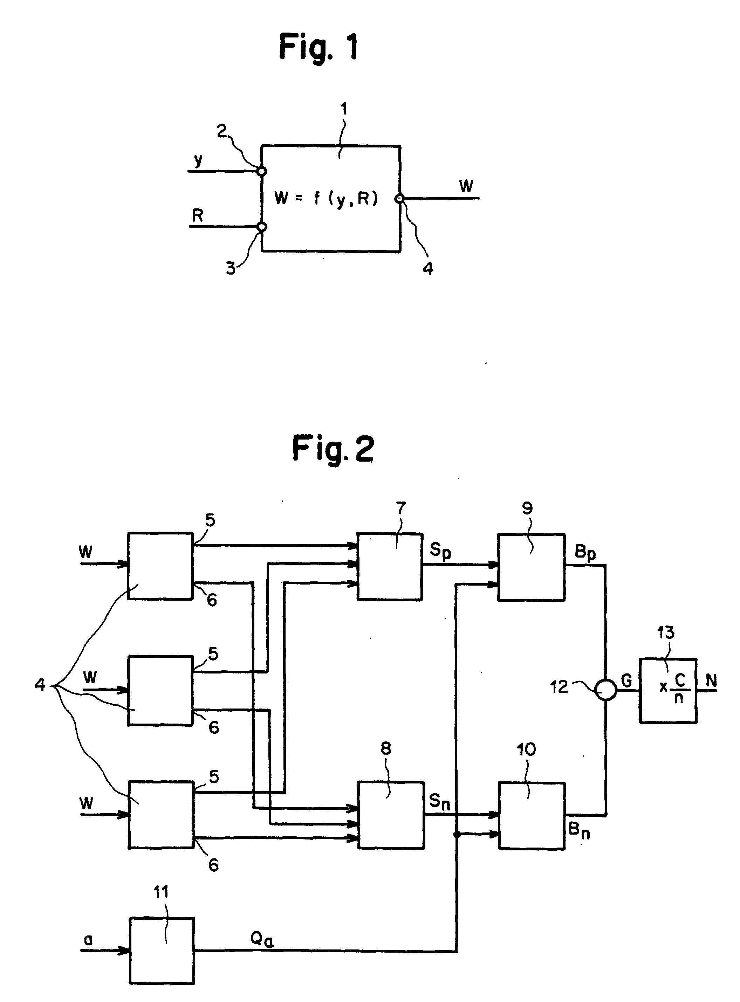

Nachfolgend werden nun Elemente einer Vorrichtung zur Durchführung des zuvor beschriebenen Verfahrens anhand der Zeichnung erläutert. In der Fig. 1 bedeutet 1 ein Verknüpfungsglied, das einen ersten Eingang 2 aufweist, an dem das Signal für den Öffnungsgrad y anliegt. Dieses Signal kann; wie eingangs schon erwähnt, das Signal des Öffnungsgrads eines stufenlos verstellbaren Ventils oder das Signal des mittleren zeitlichen Öffnungsgrads eines AUF-ZU-Ventils sein. An einem zweiten Eingang 3 liegt das Signal der Regeldifferenz R an. Das Verknüpfungsglied 1 verknüpft die an den Eingängen 2, 3 anliegenden Signale zu einem Wärmebedarfssignal W und stellt diese Größe an einem Ausgang 4 zur Weiterverarbeitung zur Verfügung.

Das Verknüpfungsglied 1 ist beispielsweise ein Rechenglied, das das Wärmebedarfssignal W als Funktion des Öffnungsgrads y und der Regeldifferenz R berechnet:

$$W = f\,(y,\,R)$$

Zur Realisierung des Verknüpfungsglieds 1 bietet der Stand der Technik viele Möglichkeiten. Nachfolgend wird eine vorteilhafte Ausgestaltung bei einem digitalen Heizungsregler erläutert, bei der das Wärmebedarfssignal W mit Hilfe einer Entscheidungstabelle gebildet wird.

Die Entscheidungstabelle enthält Zeilen und Spalten. Je ein Bereich für den wert der Regeldifferenz R, ausgedrückt in Grad Kelvin, ist einer Zeile zugeordnet. Je ein Bereich für den Wert des Öffnungsgrads y ist einer Spalte zugeordnet. Jede Zelle der Tabelle, die durch Zeile und Spalte gekennzeichnet ist, enthält die Größe des Wärmebedarfssignals W:

| R | Öffnungsgrad y (in %) | | | | |
|---|---|---|---|---|---|
| | 0-20 | 20-40 | 40-60 | 60-80 | 80-100 |
| > +1,0 K | 0 | 0 | +1 | +2 | +3 |
| +0,5...+1,0 K | 0 | 0 | 0 | +1 | +2 |
| -0,5...+0,5 K | -1 | 0 | 0 | 0 | +1 |
| -0,5...-1,0 K | -2 | -1 | 0 | 0 | 0 |
| < -1,0 K | -3 | -2 | -1 | 0 | 0 |

Das Wärmebedarfssignal W ist in diesem Fall eine vorzeichenbehaftete gestufte Größe mit dem Wertebereich von -3 bis +3. Durch die Festsetzung der Werte ist eine Gewichtung impliziert. Im Falle einer analogen oder digitalen Berechnung des Wärmebedarfssignals W nach der zuvor genannten Formel kann ein Gewichtungsfaktor x in die Formel eingeführt werden, die so beispielsweise die folgende Form annimmt:

$$W = f\,(x{\cdot}y,\,(1{-}x){\cdot}R)$$

Durch die Wahl von x im Bereich von 0 bis 1 kann bestimmt werden, ob der Einfluß des Öffnungsgrads y oder der Regeldifferenz R überwiegen soll. Die Gewichtung kann alternativ auch mit Hilfe separater Gewichtungsfaktoren erfolgen.

In der Fig. 2 ist eine Anordnung gezeigt, mit der mehrere Wärmebedarfssignale W zu einem Gesamtbedarfssignal G verknüpft werden.

Mit der Bezugszahl 4 sind Diskriminatoren bezeichnet, deren jeder einen Eingang aufweist, an dem das Wärmebedarfssignal W anliegt, das von Verknüpfungsgliedern 1 stammt. Die Zahl der Diskriminatoren 4 richtet sich nach der Zahl der in einer Heizungsanlage vorhandenen separat erzeugten Wärmebedarfssignale W. Bei einer Heizungsanlage eines Mehrfamilienhauses entspricht sie beispielsweise der Zahl der Wohnungen, bei Anlagen mit Einzelraumregelung beispielsweise der Zahl der Räume. Jeder Diskriminator 4 besitzt zwei Ausgänge: einen ersten Ausgang 5, der jeweils dann das Wärmebedarfssignal W führt, wenn es positiv ist, und einen zweiten Ausgang 6, der das Wärmebedarfssignal W führt, wenn es negativ ist. Jeder Diskriminator 4 stellt also einen Vergleicher dar, der das Wärmebedarfssignal W je nach dessen Vorzeichen auf Ausgang 5 oder 6 schaltet.

Alle Ausgänge 5 der Diskriminatoren 4 sind mit Eingängen eines ersten Summierers 7 verbunden. Der Summierer 7 bildet die Summe $S_p$ aller positiven Wärmebedarfssignale W, die an einem Ausgang zur Verfügung steht. In gleicher Weise sind alle Ausgänge 6 der Diskriminatoren 4 mit Eingängen eines zweiten Summierers 8 verbunden. Der Summierer 8 bildet die Summe $S_n$ aller negativen Wärmebedarfssignale W, die an einem Ausgang anliegt.

Die getrennte Summation der positiven und der negativen Wärmebedarfssignale W ist vorteilhaft, denn sie gestattet auf einfache Art und Weise eine generell vorteilhaft unterschiedliche Gewichtung positiver und negativer Wärmebedarfssignale W. Werden die positiven Wärmebedarfssignale W stärker gewichtet, wird dadurch erreicht, daß Komfort Vorrang vor Energieeinsparung hat. Werden die negativen Wärmebedarfssignale W stärker gewichtet, wird dadurch erreicht, daß der Energieeinsparung der Vorrang gegeben wird.

Die Weiterverarbeitung der getrennt ermittelten positiven und negativen Summen geschieht vorteilhaft dadurch, daß der Ausgang des Summierers 7 mit einem ersten Eingang eines Dividierers 9 verbunden ist, während der Ausgang des Summierers 8 auf einen ersten Eingang eines Multiplizierers 10 geführt ist. Dividierer 9 und Multiplizierer 10 besitzen je einen zweiten Eingang. Diese zweiten Eingänge sind mit dem Ausgang eines Radizierglieds 11 verbunden. Am Radizierglied 11 liegt ein Gewichtungsparameter a an, der vom Betreiber wählbar ist und die schon eingangs erwähnte Art der Mittelwertbildung bestimmt.

Das Radizierglied 11 bildet die Quadratwurzel $Q_n$. Mit diesem aus dem Gewichtungsparameter a abgeleiteten Wert dividiert der Dividierer 9 die Summe $S_p$ und bildet so einen positiven Bedarfsanteil $B_p$. Analog dazu ermittelt der Multiplizierer 10 aus der Summe $S_n$ und der Quadratwurzel $Q_a$ durch Multiplikation dieser Werte einen negativen Bedarfsanteil $B_n$.

Das Radizierglied 11 kann durchaus entfallen und der Gewichtungsparameter a unmittelbar auf den Dividierer 9 und den Multiplizierer 10 einwirken. Die Bildung der Quadratwurzel $Q_a$ hat jedoch den Vorteil, daß das Wesen der unterschiedlichen Gewichtung leicht durchschaubar ist. Wird vom Dividierer 9 und vom Multiplizierer 10 die Quadratwurzel $Q_a$ verarbeitet, so erfolgt, wie rechnerisch nachzuweisen ist, eine Bevorzugung der positiven Wärmebedarfssignale W gegenüber den negativen Wärmebedarfssignalen W um den Faktor a.

Die Ausgänge von Dividierer 9 und Multiplizierer 10 sind auf Eingänge eines weiteren Summierers 12 geführt. Der Summierer 12 bildet die Summe der Bedarfsanteile $B_p$ und $B_n$ und liefert diese an ein Proportionalglied 13. Dieses Proportionalglied 13 verstärkt die Summe der Bedarfsanteile $B_p$ und $B_n$ mit einem Quotienten aus einer Konstanten C und der Zahl n der Diskriminatoren 4, die wie erwähnt der Zahl der Wohnungen bzw. Räume entspricht. Die Zahl n ist außerdem gleich der Anzahl der separat ermittelten Wärmebedarfssignale W. Am Ausgang des Proportionalglieds 13 steht das so verstärkte Signal an, das ein Maß für die geforderte Leistungsänderung ist. Es ist als Leistungsänderungssignal N bezeichnet.

Das Leistungsänderungssignal N wirkt nun in bekannter Weise entweder auf die Drehzahl der Umwälzpumpe der Heizungsanlage ein oder bewirkt eine Veränderung des Sollwerts der Vorlauftemperatur, wahlweise durch Verschiebung der Heizkurve oder durch Variation des Sollwertes der Raumtemperatur.

Der Gewichtungsparameter a hat vorteilhaft einen Wert zwischen 0,25 und 4. Für große Werte von a wird die Summe $S_p$ aller positiven Wärmebedarfssignale W stark gewichtet, was unter Umständen dazu führen kann, daß schon der Mehrbedarf einer einzigen Wohnung zu einer Anhebung des Leistungsangebots führt. Große Werte von a bedeuten somit eine Komfortmaximierung.

Umgekehrt wird bei kleinen Werten von a die Summe $S_n$ aller negativen Wärmebedarfssignale W stark gewichtet, was dazu führt, daß eine Leistungsanhebung nur dann auftritt, wenn die Mehrzahl aller Wohnungen einen Mehrbedarf hat. Kleine Werte von a bedeuten somit eine Maximierung der Energieeinsparung. Der Betreiber der Heizungsanlage, beispielsweise der Hauswart in einem Mehrfamilienhaus, hat also durch die Möglichkeit zur Einstellung des Gewichtungsparameters a einen Einfluß auf die Betriebsweise der Heizungsanlage. Damit kann beispielsweise erreicht werden, daß durch Wahl eines kleinen Wertes von a die Bewohner angehalten werden, nicht unnötig zu lüften.

Das beschriebene Verfahren und die dieses Verfahren ausführende Vorrichtung kann vorzugsweise zur Regelung einer Heizunganlage in Mehrfamilienhäusern verwendet werden, bei der die einzelnen Wohnungen separat geregelt werden. Anwendbar ist die Erfindung gleichfalls bei größeren Anlagen mit Einzelraum-Regelung.

**Patentansprüche**

1. Verfahren zum Regeln des mittleren Wärmemengenstroms, der einzelnen Räumen einer aus mehreren Räumen und/oder Gruppen von Räumen bestehenden Zentralheizungsanlage zugeführt wird, bei dem der Öffnungsgrad (y) von an Heizkörpern einzelner Räume angebrachten Regel- oder Steuerventilen gemessen und dieser Öffnungsgrad (y) zur Bildung eines Wärmebedarfssignals (W) bei der Regelung des mittleren Wärmemengenstroms verwendet wird,
   **dadurch gekennzeichnet,**
   daß für wenigstens einen einzelnen Raum einer Heizgruppe eine Regeldifferenz (R) einer Temperatur ermittelt und mit dem Öffnungsgrad (y) des betreffenden Steuerventils zu dem Wärmebedarfssignal (W) gemäß einer Funktion $W = f(y, R)$ verknüpft wird und daß dieses auch von der Regeldifferenz (R) abhängige Wärmebedarfssignal (W) bei der Regelung des den Räumen zugeführten Wärmemengenstrons verwendet wird.

2. Verfahren nach Anspruch 1, dadurch gekennzeichnet, daß die berücksichtigte Regeldifferenz (R) die Regeldifferenz der Raumtemperatur ist.

3. Verfahren nach Anspruch 1 oder 2, dadurch gekennzeichnet, daß bei der Verknüpfung der Regeldifferenz (R) mit dem Öffnungsgrad (y) durch einen Gewichtungsfaktor (x) der Einfluß beider Größen auf das resultierende Wärmebedarfssignal (W) wählbar ist.

4. Verfahren nach einem der Ansprüche 1 bis 3, dadurch gekennzeichnet, daß beim Vorliegen von mehr als einem Wärmebedarfssignal (W) diese Wärmebedarfssignale (W) zu einem Gesamtbedarfssignal (G) summiert werden.

5. Verfahren nach Anspruch 4, dadurch gekennzeichnet, daß bei der Summation die negativen und die positiven Wärmebedarfssignale (W) separat zu Teilsummen ($S_n$, $S_p$) summiert und diese mit einer Gewichtung zu einem Gesamtbedarfssignal (G) verarbeitet werden.

6. Verfahren nach Anspruch 5, dadurch gekennzeichnet, daß die Gewichtung der positiven Teilsumme ($S_p$) und der negativen Teilsumme ($S_n$) unterschiedlich ist.

7. Verfahren nach Anspruch 6, dadurch gekennzeichnet, daß die positive Teilsumme ($S_p$) durch eine Gewichtungsgröße ($Q_a$) dividiert wird, daß die negative Teilsumme ($S_n$) mit dieser Gewichtungsgröße ($Q_a$) multipliziert wird und daß die Summe des genannten Quotienten ($B_p$) und des genannten Produkts ($B_n$) das Gesamtbedarfssignal (G) bildet.

8. Verfahren nach einem der Ansprüche 4 bis 7, dadurch gekennzeichnet, daß aus dem Gesamtbedarfssignal (G) unter Berücksichtigung von Daten der Heizungsanlage ein Leistungsänderungssignal (N) ermittelt wird.

9. Verfahren nach Anspruch 8, dadurch gekennzeichnet, daß das Leistungsänderungssignal (N) das Produkt des Gesamtbedarfssignals (G) mit einem Quotienten aus einer Konstanten (C) und der Anzahl (n) der Wärmebedarfssignale (W) ist.

10. Verfahren nach Anspruch 8 oder 9, dadurch gekennzeichnet, daß der Wärmemengenstrom in der Heizungsanlage nach Maßgabe des Leistungsänderungssignals (N) durch Variation der Durchflußgeschwindigkeit des Wärmeträgermediums variiert wird

11. Verfahren nach Anspruch 8 oder 9, dadurch gekennzeichnet, daß der Wärmemengenstrom in der Heizungsanlage nach Maßgabe des Leistungsänderungssignals (N) durch Variation der Vorlauftemperatur des Wärmeträgermediums variiert wird.

12. Verfahren nach Anspruch 11, dadurch gekennzeichnet, daß die Variation der Vorlauftemperatur dadurch erfolgt, daß eine bei der Bestimmung der Vorlauftemperatur in Abhängigkeit von einer Außentemperatur wirksame Heizkurve unverändert bleibt und stattdessen der Sollwert einer Raumtemperatur temporär variiert wird.

13. Heizungsregler zum Regeln des mittleren Wärmemengenstroms, der einzelnen Räumen einer aus mehreren Räu-

**EP 0 594 886 B1**

men und/oder Gruppen von Räumen bestehenden Zentralheizungsanlage zuführbar ist,
mit einem Regelglied (13), das in Abhängigkeit von einem vom Öffnungsgrad (y) von Wärmemittel-Regel- oder
-Steuerorganen abhängigen Wärmebedarfssignal (W) ein Signal erzeugt, das ein den mittleren Wärmemengenstrom beeinflussendes Stellglied steuert,
**dadurch gekennzeichnet,**
daß ein Verknüpfungsglied (1) den Öffnungsgrad (y) mit der Regeldifferenz (R) der Raumtemperatur wenigstens
eines Raumes einer Gruppe von beheizten Räumen (Heizgruppe) oder der Regeldifferenz (R) der Vorlauftemperatur oder der Regeldifferenz (R) der Rücklauftemperatur oder der Regeldifferenz (R) der Spreizung zwischen Vor-
und Rücklauftemperatur zu dem Wärmebedarfssignal (W) verknüpft.

14. Heizungsregler nach Anspruch 13,
    dadurch gekennzeichnet,

    daß ein Speicherelement eine Heizkurve speichert, welche einen Zusammenhang zwischen der Außentemperatur und dem Sollwert der Vorlauftemperatur des Wärmemittels herstellt,
    daß Temperaturfühler die Außentemperatur und die Raumtemperatur wenigstens in einzelnen Räumen und/
    oder Raumgruppen abfühlen, und
    daß das Verknüpfungsglied (1) den Öffnungsgrad (y) mit der Regeldifferenz (R) der Raumtemperatur verknüpft.

**Claims**

1. A method of regulating the mean quantitative heat flow which is fed to individual rooms of a central heating installation comprising a plurality of rooms and/or groups of rooms, in which the degree of opening (y) of regulating or
   control valves fitted to heating bodies of individual rooms is measured and said degree of opening (y) is used to
   form a heat demand signal (W) in regulation of the mean quantitative heat flow, characterised in that for at least
   one individual room of a heating group a regulating difference (R) of a temperature is ascertained and linked to
   the degree of opening (y) of the control valve in question for the heat demand signal (W) in accordance with a
   function W = f (y, R) and that said heat demand signal (W) which is also dependent on the regulating difference
   (R) is used in regulation of the quantitative heat flow fed to the rooms.

2. A method according to claim 1 characterised in that the regulating difference (R) which is taken into consideration
   is the regulating difference in respect of the room temperature.

3. A method according to claim 1 or claim 2 characterised in that when linking the regulating difference (R) to the
   degree of opening (y) the influence of both parameters on the resulting heat demand signal (W) can be selected
   by a weighting factor (x).

4. A method according to one of claims 1 to 3 characterised in that when there is more than one heat demand signal
   (W) said heat demand signals (W) are summed to give an overall demand signal (G).

5. A method according to claim 4 characterised in that in the summing operation the negative and the positive heat
   demand signals (W) are summed separately to give partial sums $(S_n, S_p)$ and same are processed with a weighting
   to give an overall demand signal (G).

6. A method according to claim 5 characterised in that the weighting of the positive partial sum $(S_p)$ and of the negative
   partial sum $(S_n)$ is different.

7. A method according to claim 6 characterised in that the positive partial sum $(S_p)$ is divided by a weighting value
   $(Q_a)$, that the negative partial sum $(S_n)$ is multiplied by said weighting value $(Q_a)$ and that the sum of said quotient
   $(B_p)$ and said product $(B_n)$ forms the overall demand signal (G).

8. A method according to one of claims 4 to 7 characterised in that an output-change signal (N) is ascertained from
   the overall demand signal (G), having regard to data in respect of the heating installation.

9. A method according to claim 8 characterised in that the output-change signal (N) is the product of the overall
   demand signal (G) with a quotient of a constant (C) and the number (n) of the heat demand signals (W).

EP 0 594 886 B1

**10.** A method according to claim 8 or claim 9 characterised in that the quantitative heat flow in the heating installation is varied in accordance with the output-change signal (N) by varying the rate of circulation of the heat carrier medium.

**11.** A method according to claim 8 or claim 9 characterised in that the quantitative heat flow in the heating installation is varied in accordance with the output-change signal (N) by varying the flow temperature of the heat carrier medium.

**12.** A method according to claim 11 characterised in that the variation in the flow temperature is effected by a procedure whereby a heating curve which is operative in determining the flow temperature in dependence on an outside temperature remains unaltered and instead the reference value of a room temperature is temporarily varied.

**13.** A heating regulator for regulating the mean quantitative heat flow which can be fed to individual rooms of a central heating installation comprising a plurality of rooms and/or groups of rooms, comprising a regulating member (13) which in dependence on a heat demand signal (W) which is dependent on the degree of opening (y) of heating means regulating or control members produces a signal which controls an adjusting member which influences the mean quantitative heat flow, characterised in that a linking member (1) links the degree of opening (y) to the regulating difference (R) of the room temperature of at least one room of a group of heated rooms (heating group) or the regulating difference (R) of the flow temperature or the regulating difference (R) of the return temperature or the regulating difference (R) of the spread between the flow and return temperatures for the heat demand signal (W).

**14.** A heating regulator according to claim 13 characterised in that

a storage element stores a heating curve which makes a relationship between the outside temperature and the reference value of the flow temperature of the heating means,
temperature sensors sense the outside temperature and the room temperature at least in individual rooms and/or groups of rooms, and
the linking member (1) links the degree of opening (y) to the regulating difference (R) of the room temperature.

**Revendications**

**1.** Procédé de régulation du flux moyen de quantité de chaleur qui est fourni aux différentes pièces d'une installation de chauffage central se composant de plusieurs pièces et/ou de groupes de pièces, procédé dans lequel le degré d'ouverture (y) est mesuré par des vannes de régulation ou de commande montées sur les radiateurs des différentes pièces, ce degré d'ouverture (y) étant utilisé pour la formation d'un signal (W) des besoins en chaleur lors de la régulation du flux moyen de quantité de chaleur,
caractérisé

en ce que, pour au moins une pièce indépendante d'un groupe de chauffe, on calcule une différence de régulation (R) d'une température et que cette différence de régulation est combinée avec le degré d'ouverture (y) de la vanne de commande concernée, pour former le signal (W) des besoins en chaleur selon une fonction W = f (y, R), et
en ce que ce signal (W) des besoins en chaleur dépendant de la différence de régulation (R) est utilisé lors de la régulation du flux de quantité de chaleur fourni aux pièces.

**2.** Procédé selon la revendication 1, caractérisé en ce que la différence de régulation (R) considérée est la différence de régulation de la température ambiante.

**3.** Procédé selon la revendication 1 ou 2, caractérisé en ce que, lors de la combinaison de la différence de régulation (R) avec le degré d'ouverture (y), par un facteur de pondération (x), on peut choisir l'influence des deux valeurs sur le signal obtenu (W) des besoins en chaleur.

**4.** Procédé selon l'une quelconque des revendications 1 à 3, caractérisé en ce que, lorsqu'il y a plus d'un signal (W) des besoins en chaleur, ces signaux (W) des besoins en chaleur sont additionnés pour former un signal (G) de la demande totale des besoins en chaleur.

**5.** Procédé selon la revendication 4, caractérisé en ce que, lors de l'addition, les signaux négatifs et positifs (W) des besoins en chaleur sont additionnés séparément en formant des sommes partielles ($S_n$, $S_p$), ces signaux étant transformés, par pondération, en un signal (G) de la demande totale des besoins en chaleur.

**6.** Procédé selon la revendication 5, caractérisé en ce que la pondération de la somme partielle positive ($S_p$) et de la somme partielle négative ($S_n$) est réalisée de façon différenciée.

**7.** Procédé selon la revendication 6, caractérisé en ce que la somme partielle positive ($S_p$) est divisée par une valeur de pondération ($Q_a$), en ce que la somme partielle négative ($S_n$) est multipliée par cette valeur de pondération ($Q_a$) et en ce que la somme des quotients cités ($B_p$) et du produit cité ($B_n$) forment le signal (G) de la demande totale des besoins en chaleur.

**8.** Procédé selon l'une quelconque des revendications 4 à 7, caractérisé en ce que, d'après le signal (G) de la demande totale des besoins en chaleur, on calcule un signal (N) de modification de puissance, en tenant compte de données de l'installation de chauffage.

**9.** Procédé selon la revendication 8, caractérisé en ce que le signal (N) de modification de puissance est le produit du signal (G) de la demande totale des besoins en chaleur, avec un quotient se composant d'une constante (C) et du nombre (n) de signaux (W) des besoins en chaleur.

**10.** Procédé selon la revendication 8 ou 9, caractérisé en ce que le flux de quantité de chaleur circulant dans l'installation de chauffage est modifié, selon le signal (N) de modification de puissance, par une variation de la vitesse d'écoulement du caloporteur.

**11.** Procédé selon la revendication 8 ou 9, caractérisé en ce que le flux de quantité de chaleur circulant dans l'installation de chauffage varie, selon le signal (N) de modification de puissance, par variation de la température de la canalisation montante du caloporteur.

**12.** Procédé selon la revendication 11, caractérisé en ce que la variation de la température de la canalisation montante se produit par le fait qu'une courbe de chauffage efficace, lors de la détermination de la température de la canalisation montante en fonction d'une température extérieure, reste inchangée et que, au lieu de cela, la valeur de consigne d'une température ambiante est modifiée de façon temporaire.

**13.** Régulateur de chauffage servant à la régulation du flux moyen de quantité de chaleur qui peut être fourni aux différentes pièces d'une installation de chauffage central se composant de plusieurs pièces et/ou de groupes de pièces, comprenant
un élément de régulation (13) qui, en fonction d'un signal (W) des besoins en chaleur dépendant du degré d'ouverture (y) d'organes de régulation ou de commande du caloporteur, produit un signal qui commande un élément de réglage influençant le flux moyen de quantité de chaleur,
caractérisé en ce qu'un élément logique (1) combine le degré d'ouverture (y) avec la différence de régulation (R) de la température ambiante au moins d'une pièce d'un groupe de pièces chauffées (groupe de chauffe) ou avec la différence de régulation (R) de la température de la canalisation montante ou avec la différence de régulation (R) de la température de la canalisation de retour ou avec la différence de régulation (R) de l'écart entre la température de la canalisation montante et la température de la canalisation de retour, pour former le signal (W) des besoins en chaleur.

**14.** Régulateur de chauffage selon la revendication 13, caractérisé en ce qu'un élément de mémoire mémorise une courbe de chauffage qui établit un rapport entre la température extérieure et la valeur de consigne de la température de la canalisation montante du caloporteur, en ce que des sondes de température détectent la température extérieure et la température ambiante, au moins dans des pièces indépendantes et/ou des groupes de pièces indépendants, et en ce que l'élément logique (1) combine le degré d'ouverture (y) avec la différence de régulation (R) de la température ambiante.

# Fig. 1

# Fig. 2